# EUROPÄISCHE PATENTSCHRIFT

(11) **EP 0 471 047 B1**
(45) Veröffentlichungstag und Bekanntmachung des Hinweises auf die Patenterteilung: **27.07.1994**
(21) Anmeldenummer: 91903863.8
(22) Anmeldetag: 28.02.1991
(51) Int. Cl.: F16F 1/36

(54) **SCHWINGUNGEN DÄMPFENDES DÄMMELEMENT**
VIBRATION-DAMPING COMPONENT
ELEMENT AMORTISSEUR DE VIBRATIONS

(30) Priorität: 01.03.1990 CH 652/90
(43) Veröffentlichungstag der Anmeldung: 19.02.1992
(73) Patentinhaber: SEVEN-AIR GEBRUEDER MEYER AG, Ch-6000 Luzern (CH)
(72) Erfinder: FELIX, Urs, CH-6285 Hitzkirch (CH)
(74) Vertreter: Troesch Scheidegger Werner AG
(86) Internationale Anmeldenummer: CH9100048
(87) Internationale Veröffentlichungsnummer: WO9113269

## Beschreibung

Die vorliegende Erfindung betrifft ein Schwingungen dämpfendes Dämmelement mit steifen und gummielastischen Teilen, welche Teile gleichachsig und miteinander wirkverbunden sind.

Im Zuge des Schutzes der Menschen gegen äussere Einflüsse besteht die Notwendigkeit, lärmerzeugende Maschinen und Vorrichtungen in Anlagen zu dämpfen, um die Gebraucher vor den Belästigungen solcher Schallwellen zu schützen. Das gleiche Problem stellt sich auch bezüglich Schwingungen, welche sich unangenehm bemerkbar machen können, beispielsweise bei Ausschwingmaschinen für Wäsche u. dgl.

Da in der Technik immer mehr auf das Baukastensystem übergegangen wird, insbesondere um die Lagerhaltung an Teilen zu verringern, besteht auch bei derartigen Dämmelementen das Bedürfnis, ein universelleres Dämmelement zu schaffen. welches nicht für spezifische, relativ in kleinen Grenzen zu haltende Belastungen ausgelegt ist, sondern die Möglichkeit bietet, mit ein- und demselben Dämmelement Belastungen in grossen Grenzen zu halten.

In der FR-A- 1 035 971 ist ein Schwingungen dampfendes Dämmelement mit steifen und gummielastischen Teilen beschrieben, welche Teile gleichachsig und miteinander wirkverbunden sind. Dabei weisen gummielastische Teile im unbelasteten Zustand axial unterschiedlich gelegene,zur Auflage vorgesehene Flächen auf, um deren Auflage, in Abhängigkeit von der auf das Dämmelement wirkenden Last, zu verändern. In diesem Patent ist ferner ein achsennäherer, trogartiger, steifer Teil und ein achsenfernerer, gummielastischer, ringförmiger Teil dargestellt.

Diese Konstruktion ist in ihrem Aufbau platzaufwendig und bezüglich der gummielastischen Teile und deren Alterung in dem Sinne nicht optimal ausgebildet, als der achsennähere, trogartige, steife Teil der Halterung des ihn umfassenden gummielastischen Teils schlecht Rechnung trägt.

In diesem Sinne bezweckt die vorliegende Erfindung die Schaffung eines Dämmelementes, welches auf kleinstem Raum ein sicherstes Funktionieren erlaubt und dessen Aufbau derart vorgesehen ist, dass aufgrund des Baukastensystems die Lagerhaltung an den es aufbauenden Teils minimal gestaltet ist. Zudem ist es möglich, mit diesem Dämmelement die grossen Grenzen wechselnden Belastungen aufzunehmen.

Die vorliegende Erfindung bezweckt die Schaffung eines derartigen Dämmelementes.

Erfindungsgemäss zeichnet sich dieses aus durch den Wortlaut des Anspruches 1. Vorteilhafte Ausgestaltungen der Erfindung ergeben sich gemäß den Ansprüchen 2 bis 6.

Ein Ausführungsbeispiel des Erfindungsgegenstandes wird anschliessend anhand einer Zeichnung erläutert.

Es zeigen:
- Fig. 1: einen Längsschnitt durch ein Dämmelement in unbelastetem Zustand,
- Fig. 2: die Dämpfungskurve eines Elementes gemäss Fig. 1,
- Fig. 3: eine Liste mit Angaben der Isolierwirkung bzw. der Dämmung von nach Fig. 1 aufgebauten Dämmelementen.

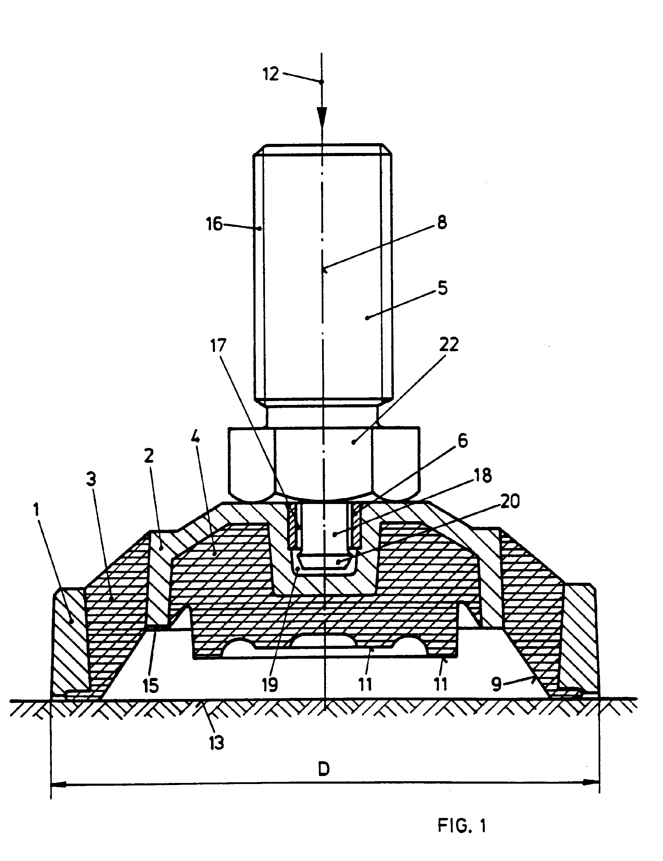

Der Aufbau des Dämmelementes gemäss Fig. 1 zeigt eine Aussenschale 1 und eine Innenschale 2, welche Teile normalerweise aus Metall, beispielsweise Aluminiumdruckguss, insbesondere Silafont 65, hergestellt sind. Es ist aber auch möglich, diese aus armiertem Kunststoff, beispielsweise glasfaserarmiertem Kunststoff, herzustellen oder, je nach Umständen, aus einem anderen Metall.

An der Innenwand der Aussenschale 1 liegt ein äusseres gummielastisches Element, in dargestellter Weise, auf, welches vorzugsweise aus einem Elastomer besteht, beispielsweise Naturkautschuk, und eine Härte von beispielsweise 60° Shore besitzt.

Je nach Verwendungszweck ist es natürlich möglich, auch andere Elastomere in ungefähr diesem Bereich der Shorehärte zu verwenden.

Die innere Begrenzung des äusseres Elementes 3 liegt an der Aussenfläche der Innenschale 2 an, während ein inneres gummielastisches Element 4 in der inneren Ausnehmung der Innenschale 2 eingebracht ist.

Die Innenschale 2 ist mit einer Nivellierschraube 5 versehen, welche über eine Lagerbuchse 6 in einer Ausnehmung 19 der Innenschale 2 eingesetzt ist.

Das Dämmelement ist bezüglich seiner Längsachse symmetrisch, normalerweise rotationssymmetrisch aufgebaut. Es kann aber auch einen mehreckigen, insbesondere auch quadratischen Umfang aufweisen.

Das äussere Element 3 hat eine äussere Auflagefläche 9, während das innere Element 4, wie in Fig. 1 ersichtlich, mehrere innere Auflageflächen 11 besitzt.

Es ist natürlich möglich, als innere Auflagefläche Teil einer Kugelfläche vorzusehen, wobei auch die äussere Auflagefläche 9 in diesem Sinne gewölbt werden kann.

Im vorliegenden Fall kommen die einzelnen Auflageflächen 9 und 11, je nach äusserer Last 12 zum Einsatz, wobei zuerst die äusseren Auflageflächen 9 und bei wachsender Belastung die nächst äusseren Auflageflächen 11 zum dämpfenden Aufliegen auf die Stützfläche 13 gelangen.

Werden nun voneinander getrennte Auflageflächen, wie dies beispielsweise die Auflageflächen 11 zeigen, gewählt, so arbeitet ein derartiges Dämmelement in Stufen. Es ist aber möglich, die Auflageflächen mit stetigem Verlauf ihrer Tangenten im Achsialschnitt (Fig. 1) auszubilden, so dass kein stufenweiser Einsatz, sondern ein kontinuierlicher Einsatz der Elemente 3 und 4 zum Dämmen kommt.

Es ist ferner möglich, beispielsweise aus Montagegründen, die beiden Elemente 3 und 4 durch einen Verbindungsring 15 miteinander zu verbinden.

Die Nivellierschraube 5 ist an ihrem freien Ende mit einem Nivelliergewinde 15 versehen, während ihr anderes Ende 18 mit merklichem Spiel in der Lagerbuchse 6 sitzt. Zur achsialen Halterung dient ein Vorsprung 20 am Ende 19. Die normalerweise geschlitzte Lagerbuchse 6, wenn sie mitsamt der Nivellierschraube 5 in eine Ausnehmung 19 der Innenschale 2 eingepresst wird, sichert bei Belastung ein Verbleiben der Nivellierschraube 5 in der Ausnehmung 19. Trotzdem ist ein Verschwenken der Längsachse 8 auf einem Kegelmantel mit der Kegelspitze im Ende 18 möglich. Damit können entsprechende Unebenheiten der Stütz- oder Auflagefläche 13 des Dämmelementes kompensiert werden. Ein Sechskant 22 erlaubt die Nivellierschraube 5 auch unter einer Last 12 mühelos zwecks Höheneinstellung zu drehen.

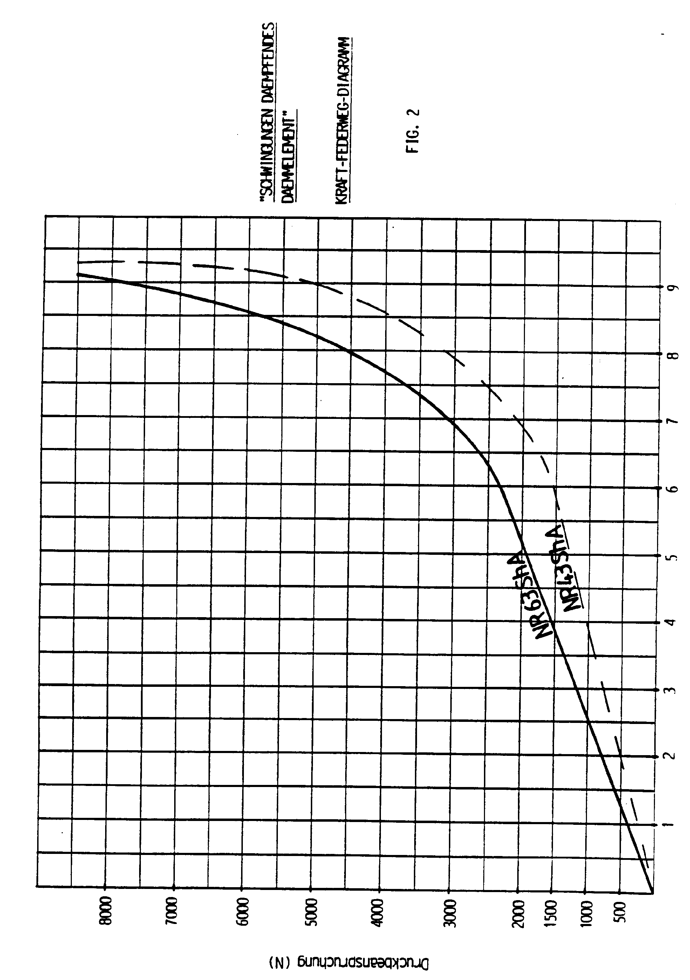

Fig. 2 zeigt die Durchbiegung unter einer Last in mm auf der Abszissenachse, wobei die Belastung durch die Ordinate in N angegeben ist. Dabei ist festzuhalten, dass bei derartigen gummielastischen Stoffen, wie im übrigen auch bei anderen Federn, zumindest im Anfangsbereich die Elongation bzw. Durchbiegung im wesentlichen proportional der Belastung ist und, im vorliegenden Fall, erst bei grösseren Belastungen die Elongation weniger stark wächst als die Belastung. Durch entsprechende Formgebung der Auflageflächen und der Dimensionierung der einzelnen Schalen ist es möglich, eine derartige Charakteristik kontinuierlich oder diskontinuierlich vorzusehen, immer jedoch für einen grossen Lastbereich, wie im vorliegenden Fall zwischen O und einigen Tausend N.

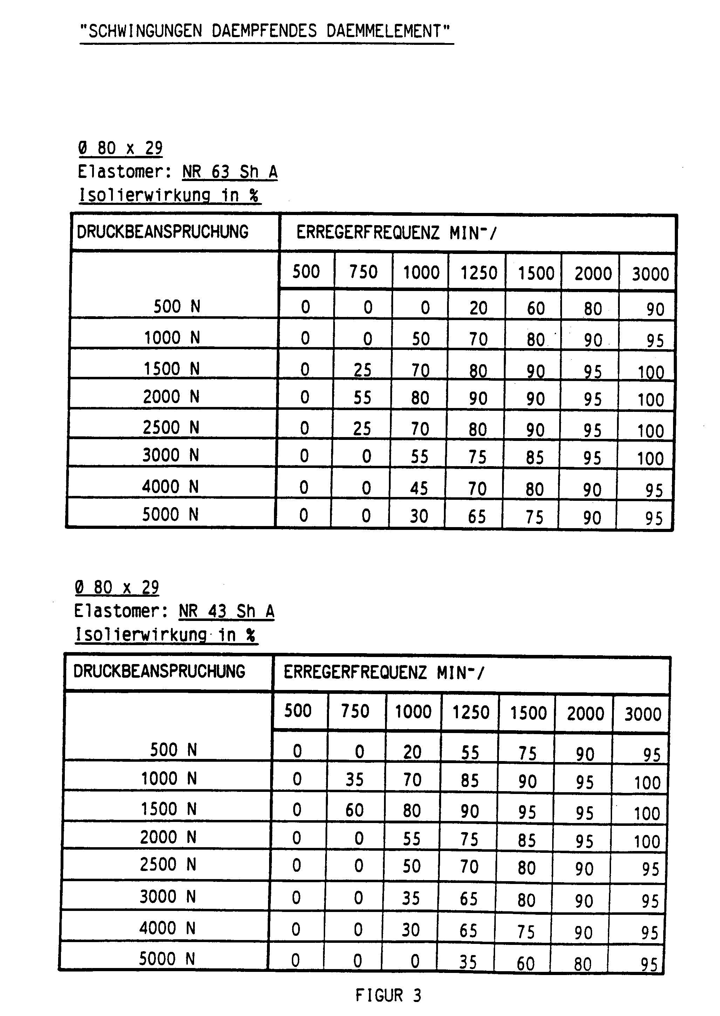

Fig. 3 zeigt die dämpfende Wirkung oder Isolierwirkung in % eines derartigen Dämmelementes gemäss Fig. 1 bei verschiedenen Belastungen (Fig. 2) und verschiedenen Erregerfrequenzen. Diese Tabelle gilt für ein Element mit einem Durchmesser D von 29 und einer Höhe von 80mm, gemessen an einer Ausführung gemäss Fig. 1 mit einem Elastomer NR mit 63 Shore A-Härte bzw. NR 43 Shore A-Härte.

Das beschriebene Dämmelement ist von sehr gedrungener Bauart. Es besitzt trotzdem die Eigenschaft, für sehr unterschiedliche Lasten einsetzbar zu sein, was dadurch ermöglicht wird, dass entsprechend der Last die Auflageflächen dieses Elementes sich ändern, was diskontinuierlich oder kontinuierlich erfolgen kann. Damit ist es möglich, mit sehr kompakt gebauten Elementen trotzdem geringste Lagerhaltungen zu sichern, was sich in jeder Beziehung vorteilhaft auswirkt.

Ein Anwendungsbereich derartiger Dämmelemente ist z.B. die Klimatechnik mit Luftumwälzvolumen von 2'000 bis 200′000 m³/h. Dank derartiger universeller Dämmelemente erübrigt sich auch die mühsame Bestimmung des Schwerpunktes von Anlageteilen.

Alle in der Beschreibung und/oder den Figuren dargestellten Einzelteile und Einzelmerkmale sowie deren Permutationen, Kombinationen und Variationen sind erfinderisch, und zwar für n Einzelteile und Einzelmerkmale mit den Werten n = 1 bis n → ∞.

## Patentansprüche

1. Schwingungen dämpfendes Dämmelement mit steifen und gummielastischen Teilen (1, 2; 3, 4), welche Teile gleichachsig (8) und miteinander wirkverbunden sind, wobei gummielastische Teiles (3,4) im unbelasteten Zustand zumindest abschnittweise axial (8) unterschiedlich gelegene, zur Auflage vorgesehene Flächen (9,11) aufweisen, um deren Auflage in Abhängigkeit von der auf das Dämmelement wirkenden Last (12) zu verändern, und mit einem achsennäheren, steifen, trogartigen Teil (2) und einem achsenferneren, gummielastischen, ringförmigen Teil (3), dadurch gekennzeichnet, dass ein gegenüber dem achsenferneren, gummielastischen Teil (3) achsennäherer, gummielastischer Teil (4) den trogartigen, steifen Teil (2) im unbelasteten Zustand des Dämmelementes vollständig ausfüllt.

2. Dämmelement nach Anspruch 1, dadurch gekennzeichnet, dass die gummielastischen Teile (3, 4) mindestens teilweise durch einen steifen Teil (2) voneinander getrennt sind.

3. Dämmelement nach Anspruch 1 oder 2, dadurch gekennzeichnet, dass die gummielastischen Teile (3, 4) ein zusammenhängendes Gebilde (3, 15; 4) sind.

4. Dämmelement nach einem der Ansprüche 1 bis 3, dadurch gekennzeichnet, dass die zur Auflage vorgesehenen Flächen (11) des oder der achsennäheren, gummielastischen Teile rotationssymmetrisch ausgebildet sind, wobei vorzugsweise diese Flächen (11) im Axialschnitt im wesentlichen einen stetigen Verlauf, insbesondere einen stetigen Tangentenverlauf, aufweisen.

5. Dämmelement nach einem der Ansprüche 1 bis 4, dadurch gekennzeichnet, dass der steife, achsennächste Teil (2) einen axialen, aus ihm herausragenden Zapfen (5) aufweist, dessen freies Ende mit einem Nivelliergewinde (16) versehen und dessen anderes Ende (18) Spiel (17) im steifen Teil (2) gehalten ist.

6. Dämmelement nach Anspruch 5, dadurch gekennzeichnet, dass das eingesteckte, zapfenförmige Ende (18) einen ringförmigen Vorsprung (20) aufweist, welcher vor der Montage eine vorzugsweise längsgeschlitzte Lagerbuchse (6) auf dem zapfenförmigen Ende (18) festhält, welche Lagerbuchse (6) satt sitzend in eine Ausnehmung des steifen Teiles (2) eingepresst ist.

## Claims

1. A vibration absorbing element with rigid and elastic parts (1, 2 ; 3, 4) which are coaxially and operatively linked, the elastic parts (3, 4) having support surfaces (9, 11) which are axially (8) differently arranged at least on some segments in order to change the support of said surfaces depending on the load acting on the absorbing element, and with a rigid trough-shaped part (2) close to the axis and an elastic ring-shaped part (3) distant from the axis, characterized in that an elastic part (4) which is closer to the axis than the elastic part (3) distant from said axis completely fills the trough-shaped rigid part (2) in a non stressed state.

2. Absorbing element according to claim 1, characterized in that the elastic parts (3, 4) are at least partially separated from one another by a rigid part (2).

3. Absorbing element according to claim 1 or 2, characterized in that the elastic parts (3, 4) are a joined unit (3, 15 ; 4).

4. Absorbing element according to claim 1 to 3, characterized in that the support surfaces (11) of the elastic parts close to the axis are rotational symmetrical, said surfaces (11) having preferably an approximate continuity, especially a tangential continuity in an axial section.

5. Absorbing element according to claim 1 to 4, characterized in that the rigid part (2) close to the axis has a pin (5) projecting out of it, the free end of which is provided with a levelling threading (16) and the other end (18) of which is hold with backlash (17) in the rigid part (2).

6. Absorbing element according to claim 5, characterized in that the pin-shaped end (18) inserted has a ring-shaped projection (20) which secures a preferably longitudinally slit bearing bush (6) on the pin-shaped end (18) before mounting, said bearing bush (6) being pressed free from backlash into a cavity of the rigid part (2).

## Revendications

1. Elément amortisseur de vibrations comportant des éléments rigides et des éléments élastiques (1, 2 ; 3, 4), lesquels éléments sont reliés de façon coaxiale (8) et fonctionnelle, étant précisé qu'à l'état non sollicité, les éléments élastiques (3, 4) présentent des surfaces (9, 11) prévues pour l'appui qui sont disposées axialement (8) différemment, au moins par sections, afin de modifier leur appui en fonction de la charge (12) agissant sur l'élément amortisseur, et comportant un élément en auge rigide (2) proche de l'axe ainsi qu'un élément annulaire élastique (3) éloigné de l'axe, caractérisé en ce qu'un élément élastique (4) plus proche de l'axe que l'élément élastique (3) éloigné de l'axe remplit complètement l'élément rigide en auge (2) lorsque l'élément amortisseur est à l'état non sollicité.

2. Elément amortisseur selon la revendication 1, caractérisé en ce que les éléments élastiques (3, 4) sont séparés au moins en partie par un élément rigide (2).

3. Elément amortisseur selon la revendication 1 ou 2, caractérisé en ce que les éléments élastiques (3, 4) constituent une structure liée (3, 15 ; 4).

4. Elément amortisseur selon l'une des revendications 1 à 3, caractérisé en ce que les surfaces (11) de l'élément ou des éléments élastiques proches de l'axe qui sont prévues pour l'appui sont symétriques en rotation, ces surfaces (11) présentant de préférence en coupe axiale une continuité sensible, notamment une continuité tangentielle.

5. Elément amortisseur selon l'une des revendications 1 à 4, caractérisé en ce que l'élément rigide (2) le plus proche de l'axe comporte un tourillon axial saillant (5) dont l'extrémité libre est pourvue d'un filetage de mise à niveau (16) et dont l'autre extrémité (18) est maintenue dans l'élément rigide (2) avec un jeu (17).

6. Elément amortisseur selon la revendication 5, caractérisé en ce que l'extrémité en forme de tourillon (18) introduite présente une partie saillante annulaire (20) qui immobilise avant le montage un coussinet (6) de préférence fendu longitudinalement sur l'extrémité en forme de tourillon (18), lequel coussinet (6) est enfoncé sans jeu dans un creux de l'élément rigide (2).
